(19) Europäisches Patentamt
European Patent Office
Office européen des brevets

(11) EP 0 511 901 B1

# (12) FASCICULE DE BREVET EUROPEEN

(45) Date de publication et mention
de la délivrance du brevet:
**06.03.1996 Bulletin 1996/10**

(51) Int Cl.⁶: **C03C 17/34**, C03C 17/36

(21) Numéro de dépôt: **92401148.9**

(22) Date de dépôt: **23.04.1992**

(54) **Substrat en verre revêtu de multicouches minces pour la protection solaire**

Glassubstrat beschichtet mit dünnen Merhschichten für Sonnenschütz

Glass substrate coated with thin multilayers for solar protection

(84) Etats contractants désignés:
**AT BE CH DE DK ES FR GB GR IT LI LU NL PT SE**

(30) Priorité: **30.04.1991 FR 9105328**
**30.04.1991 FR 9105329**
**30.04.1991 FR 9105330**

(43) Date de publication de la demande:
**04.11.1992 Bulletin 1992/45**

(60) Demande divisionnaire: **95111031.1**

(73) Titulaire: **SAINT-GOBAIN VITRAGE**
**F-92400 Courbevoie (FR)**

(72) Inventeurs:
• **Beaufays, Jean-Pierre**
**B-5190 Jemeppe S/ Sambre (BE)**

• **Halleux, Jean-Marc**
**B-5081 Meux (La Bruyere) (BE)**
• **Devigne, Roland**
**B-5060 Falisolle (BE)**

(74) Mandataire: **Muller, René et al**
**SAINT-GOBAIN RECHERCHE**
**39, quai Lucien Lefranc-BP 135**
**F-93303 Aubervilliers Cédex (FR)**

(56) Documents cités:
**EP-A- 0 239 280     EP-A- 0 386 993**
**EP-A- 0 404 282     EP-A- 0 438 357**
**DE-A- 4 006 029     GB-A- 2 138 026**
**US-A- 4 773 717**

• **PATENT ABSTRACTS OF JAPAN vol. 13, no.**
**402 (C-633)(3750) 6 Septembre 1989 & JP-A-01**
**145 351**

**Description**

L'invention concerne le domaine des vitrages pour l'isolation thermique et/ou la protection solaire, et plus particulièrement un substrat en verre muni de couches minces fonctionnelles déposées sous vide.

Ce type de substrat à multicouches est ici destiné plus particulièrement à l'équipement des bâtiments. En effet, en agissant sur la quantité d'énergie du rayonnement solaire, il permet d'éviter, à l'intérieur des locaux, un échauffement excessif particulièrement inconfortable en été, et contribue ainsi à limiter la consommation d'énergie nécessaire à la climatisation desdits locaux. Ce point est d'autant plus crucial que la tendance actuelle est d'augmenter la proportion des surfaces vitrées sur les façades des bâtiments.

Il existe cependant d'autres exigences pour que de tels substrats à couches soient utilisables dans le bâtiment, et tout d'abord une exigence de durabilité des couches minces, spécialement dans le cas où ils sont destinés à être utilisés comme vitrages monolithiques.

Il est en effet important que ce substrat revêtu de couches minces soit utilisable éventuellement en vitrage monolithique. Cela implique que les couches minces doivent se révéler résistantes dans le temps, même sans que les couches soient protégées comme ce serait le cas à l'intérieur d'un vitrage feuilleté ou d'un vitrage multiple type double vitrage. Or, en vitrage monolithique, les couches minces sont directement soumises à des aggressions aussi bien d'ordre mécanique, par exemple par frottement créant des rayures entraînant des défauts d'aspect aussi bien vus en transmission qu'en réflexion, qu'à des agressions d'ordre chimique, par exemple au contact de l'humidité et/ou de la pollution de l'atmosphère ambiante ou lorsqu'on nettoie le vitrage avec des produits chimiques.

On ne doit pas non plus négliger une exigence d'ordre esthétique : il est souhaitable, que le vitrage, en réflexion extérieure puisse présenter des teintes diversifiées et notamment plutôt douces, pastel.

Il n'est pas nécessaire usuellement d'avoir, pour le bâtiment, des vitrages à très haute transmission lumineuse comme cela peut être le cas pour l'automobile, pour les pare-brise par exemple, mais il est néanmoins intéressant de pouvoir proposer des vitrages ayant différents niveaux de transmission lumineuse.

Quant au procédé d'obtention des couches minces, les techniques de dépôt sous vide, notamment utilisant la pulvérisation cathodique, sont bien connues et permettent de bien maîtriser les performances optiques des couches obtenues. On connaît en particulier celles qui s'effectuent en présence d'un champ magnétique qui multiplie les chocs des ions sur la cible et accélère le dépôt. On peut citer par exemple le brevet DE-24 63 431 C2, qui présente un tel procédé utilisant un magnétron planar, et le brevet US-4 116 806, qui utilise une cible en forme de courroie, dite "belt track".

De même on connaît les techniques de pulvérisation cathodique réactive qui permettent d'obtenir une couche mince en faisant réagir le matériau de la cible avec un gaz du plasma, le brevet US-3 907 660 présente ainsi une telle méthode pour le dépôt d'oxyde métallique sur du verre.

Parmi les couches minces métalliques et autres agissant sur le rayonnement solaire, notamment en diminuant la transmission énergétique $T_E$ aussi bien par absorption que par réflexion, on connaît des couches à base d'alliage de chrome-nickel ou de fer-chrome-nickel. Ainsi le brevet américain US-4 022 947 présente plus particulièrement un substrat en verre muni d'une couche faite à partir de l'un de ces alliages et d'une couche de l'oxyde correspondant audit alliage. Cette couche d'oxyde est placée soit sur la couche fonctionnelle, elle-même déposée sur le substrat, soit entre le substrat et ladite couche fonctionnelle. Dans le premier cas, elle a un rôle essentiellement protecteur, mais sans que soit chiffrée cette protection. Dans le deuxième cas, elle a un rôle essentiellement interférentiel pour modifier la coloration côté verre, mais sans en indiquer l'intensité.

Il est connu de la demande de brevet GB-A-2 138 026 un vitrage de contrôle solaire ayant une transmission de 5 à 40% et produit par dépôt d'une couche d'oxyde d'épaisseur optique de 20 à 280 nm puis d'une couche de nitrure de chrome de 10 à 40 nm.

Il est également connu de la demande de brevet européen EP-A-0 386 993 un vitrage apte à supporter les traitements thermiques muni d'un empilement de couches comprenant essentiellement une couche d'alliage au nickel surmontée d'une couche d'oxyde d'étain et, optionnellement, déposée sur une sous-couche également en oxyde d'étain.

Le but de l'invention est donc l'obtention d'un substrat à multicouches minces, remplissant efficacement une fonction de protection solaire, très résistant du côté de ces couches à la fois mécaniquement et chimiquement, et offrant une palette de colorations et de puretés de teinte en réflexion côté verre diversifiées.

Selon l'invention, le substrat en verre comporte une couche fonctionnelle en alliage métallique substantiellement consistant de chrome et de nickel. Ledit alliage est nitruré, ce qui lui confère une plus grande résistance mécanique. Son épaisseur est variable et comprise entre 15 et 45 nm afin que le substrat puisse présenter une transmission lumineuse $T_L$ de 35 à 8%. En effet, c'est cette couche qui donne au vitrage final ses propriétés de protection solaire, en diminuant la valeur de $T_E$.

Il est à noter qu'avec ce type de couche, il est impossible d'agir sur ce facteur $T_E$ sans agir également sur le facteur de transmission lumineuse $T_L$, dans la mesure où plus de 50 % de l'énergie solaire se trouve dans la gamme des longueurs d'onde comprises entre 0,38 et 0,78 nm, c'est-à-dire dans le domaine du visible. Cela amène, suivant l'épaisseur de la couche d'alliage utilisé, à proposer des vitrages ayant différents "couples" de valeur $T_L$ et $T_E$, correspondant chacun à un compromis judicieux entre une visibilité en transmission suffisante pour un confort thermique acceptable, ne serait-ce qu'en fonction de la latitude des pays auxquels les vitrages finals sont destinés. Les épaisseurs restent cependant généralement inférieures à 100 nm.

On choisit avantageusement un alliage substantiellement consistant de nickel-chrome nitruré car il est d'une mise en oeuvre facile et d'un coût modéré. Ce type d'alliage est en outre de mise en oeuvre facile, car son dépôt par pulvérisation cathodique s'effectue à une vitesse importante. Ses caractéristiques sont également avantageuses, dans la mesure où il présente de bonnes performances et notamment une émissivité améliorée. La présence conjuguée du nickel et du chrome conduit également à un aspect en réflexion du vitrage du côté de l'empilement de couches qui est d'une perception agréable à l'oeil. Le rapport massique du nickel et du chrome est de préférence de l'ordre de 55/45 dans le cas où l'alliage contient essentiellement du nickel et du chrome.

Cette couche à base de métal et/ou composés métalliques selon l'invention est placée sur une couche d'oxyde métallique que l'on désignera par le terme de "sous-couche" qui, elle, est déposée directement sur le substrat en verre. Elle est en outre revêtue d'une autre couche de composé métallique que l'on désignera par le terme de "sur-couche".

La sous-couche est avantageusement à base d'oxyde de tantale $Ta_2O_5$, son épaisseur est comprise entre 10 et 220 nm. Elle a une triple fonction : outre le fait qu'elle favorise l'adhérence de la couche fonctionnelle au substrat, son épaisseur significative lui confère un rôle interférentiel pour agir sur l'aspect en réflexion lumineuse du vitrage, mais aussi un rôle primordial quant à la tenue physico-chimique de l'ensemble de l'empilement des couches. En effet, de manière surprenante, les auteurs de la présente invention ont mis en évidence, comme cité en exemple ultérieurement, le fait que la nature de la sous-couche n'est pas indifférente vis-à-vis du comportement face aux aggressions, notamment d'ordre chimique, de l'ensemble de l'empilement.

Ainsi, si la sous-couche n'est pas choisie de manière adéquate, il peut apparaître une corrosion chimique au niveau de la sous-couche, et plus particulièrement à l'interface verre/sous-couche, ladite corrosion se traduisant par la destruction localisée de la sous-couche et de ce fait entraînant le décollement des couches supérieures. Or très avantageusement, les oxydes choisis pour la sous-couche sont particulièrement résistants chimiquement tant à l'humidité qu'à la pollution et sont donc parfaitement aptes à remplir cette fonction.

La sur-couche est un composé métallique, choisi parmi l'oxyde de titane $TiO_2$, le nitrure de titane TiN et l'oxyde de tantale $Ta_2O_5$. Cette sur-couche a une fonction primordiale de protection d'ordre mécanique et chimique de la couche fonctionnelle qu'elle recouvre. Suivant son épaisseur ainsi que celle de la couche fonctionnelle, elle peut également avoir un rôle inteférentiel et contribuer ainsi à l'aspect en réflexion du vitrage. Son épaisseur est au maximum de 100 nm, et de préférence d'au moins 5 nm.

Le substrat muni de ces couches minces est donc utilisable aussi bien en vitrage monolithique qu'associé à un autre substrat. On l'utilise avantageusement dans le bâtiment et dans l'automobile pour les surfaces vitrées n'exigeant pas des $T_L$ très élevées.

Les détails de caractéristiques avantageuses de l'invention ressortent de la description détaillée du substrat à couches minces selon l'invention, faite en référence au dessin annexé qui représente :

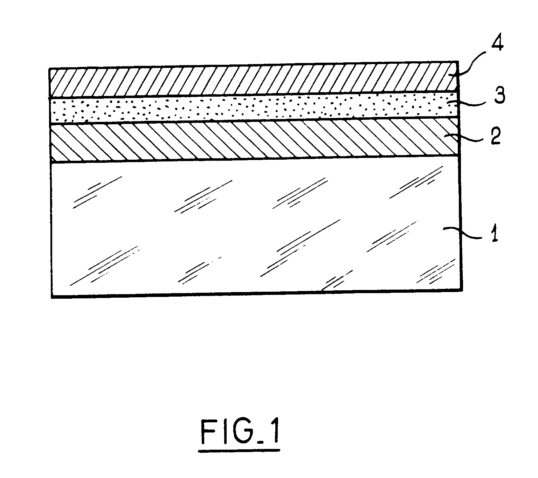

- Figure 1 : un schéma simplifié d'un substrat en verre à couches minces selon l'invention.

Par souci de clarté, les rapports d'épaisseurs n'ont pas été respectés.

On précise que tous ces dépôts de couches minces se font un à un sur le substrat de préférence par la technique de pulvérisation cathodique à magnétron en atmosphère réactive, mais pourraient être effectués par toute technique de dépôt sous vide permettant une bonne maîtrise des épaisseurs des couches déposées.

Les substrats 1 en verre silico-sodo-calcique, notamment flotté, sont introduits par un système de sas dans la chambre de pulvérisation de l'installation de dépôt. Cette chambre de pulvérisation est équipée de cathodes avec cibles en matériaux correspondant aux dépôts à effectuer.

Les dépôts des couches 2, 3, 4 se font par passages successifs du substrat sous la cible métallique et dans l'atmosphère adéquates. Pour former les sous-couches 2, la cible est en tantale et l'atmosphère est contrôlée et composée essentiellement d'argon et d'oxygène. Pour former les couches fonctionnelles, la cible est en alliage nickel-chrome et le dépôt s'effectue dans une atmosphère d'argon et d'azote pour former une couche de nickel-chrome nitrurée. Pour former la sur-couche en oxyde ou en nitrure (les exemples ici se rapporteront plus particulièrement à une sur-couche d'oxyde), on utilise une cible en titane ou tantale et une atmosphère d'argon/oxygène (ou argon/azote dans le cas d'un nitrure).

De manière connue, les puissances appliquées à chacune des cathodes ainsi que la vitesse de défilement du substrat sont ajustées de manière à obtenir les épaisseurs souhaitées pour les couches. Cependant, on n'indiquera pas dans tous les exemples exhaustivement les épaisseurs exactes de la couche fonctionnelle 3, dans la mesure où, de manière bien connue du spécialiste travaillant sur des installations de dépôt de couches sous vide, le but est de contrôler parfaitement les conditions de dépôt, qui varient pour chaque type d'installation, afin d'obtenir très précisément la transmission lumineuse $T_L$ voulue, sans pour autant déterminer systématiquement très exactement l'épaisseur de la couche qui permet d'avoir cette valeur de $T_L$.

On précise tout d'abord que l'on apprécie l'aspect en réflexion extérieure du substrat muni des couches selon l'invention par trois valeurs : la valeur de la réflexion lumineuse extérieure, côté verre, $R_1L$ donnée par la configuration du spectre en réflexion dans le visible dudit substrat compte-tenu de la sensibilité de l'oeil et d'une source lumineuse normalisée désignée par le terme illuminant $D_{65}$, la valeur de la longueur d'onde dominante Lamba dom ($R_1L$) en nanomètres indiquant la couleur en réflexion, et la pureté d'excitation pe($R_1L$) indiquant la "saturation" de cette couleur.

La valeur de la réflexion lumineuse côté intérieur, du côté des couches minces, quant à elle, est notée par la suite $R_2L$.

De plus, on précise dès à présent les tests utilisés pour apprécier la résistance mécanique de l'empilement de couches minces selon l'invention :

- les tests d'abrasion permettant d'évaluer la résistance mécanique des couches sont effectués à l'aide de meules faites de poudre abrasive noyée dans un élastomère. La machine est fabriquée par la Société Taber Instrument Corporation aux Etats-Unis. Il s'agit du modèle 174, "Standard Abrasion Tester", les meules sont de type CS10F chargées de 500 grammes. Chaque échantillon est soumis à 300 rotations, on mesure sa transmission lumineuse à une longueur d'onde de 550 nm avant ($\tau_0$) et après ($\tau_{300}$) abrasion. L'usure à l'abrasion est mesurée par la grandeur U :

$$U \% = \tau_{300} - \tau_0$$

Les tests de résistance chimique normalisés effectués sont les suivants :

- les tests de résistance au contact de brouillards salin neutre et salin cuproacétique répondent à la norme DIN 50021. Ils consistent notamment à mesurer la durée qui s'écoule (en jours) jusqu'au moment où le premier défaut apparaît dans l'empilement de couches minces, quand celui-ci est soumis aux atmosphères normalisées correspondant aux deux tests.
- le test SFW 2,0S de résistance au dioxyde de soufre $SO_2$ répond à la norme DIN 50018. Sur le même principe que les deux tests précédents, il détermine la durée (en cycles de 8 heures d'exposition et suivies de 16 heures de repos) qui s'écoule jusqu'à l'apparition d'une altération qui sera précisée ci-après.

## EXEMPLES 1 A 4 SELON L'INVENTION

La première série d'exemples non limitatifs 1 à 4 concerne un substrat à couches minces présentant une réflexion dans le visible du côté du verre colorée en bleu et muni d'une sous-couche 2 en oxyde de tantale et une sur-couche 4 en oxyde de titane.

La cible métallique utilisée pour obtenir la couche 3 fonctionnelle est en INCONEL 671 selon le standard ASTM. On choisit ici de préférence une cible frittée, obtenue à partir de poudres de nickel et de chrome dans les proportions appropriées. De cette manière, on obtient des "grains" de diamètres assez petits pour obtenir une pulvérisation uniforme.

Une interdiffusion homogène entre les deux poudres doit être de plus réalisée afin d'obtenir une cible non magnétique.

Le substrat 1 est en verre silico-sodo-calcique clair flotté de 6 mm d'épaisseur.

On adapte l'épaisseur de la couche 3 dans chacun des exemples afin d'obtenir la valeur de transmission lumineuse $T_L$ voulue. Ici, comme dans les exemples 6 et 7 suivants, elle est comprise entre 10 et 100 nm.

Les épaisseurs en nanomètres de la sous-couche 2 en $Ta_2O_5$ de la couche fonctionnelle 3, de la sur-couche 4 en $TiO_2$, ainsi que la transmission lumineuse $T_L$ de l'ensemble substrat/multicouches sont indiquées ci-dessous :

| EXEMPLES | (2) $Ta_2O_5$ | (3) $NiCrN_x$ | (4) $TiO_2$ | $T_L$ |
|---|---|---|---|---|
| 1 | 100 | 15 | 10 | 35 % |
| 2 | 100 | 28 | 10 | 19 % |
| 3 | 100 | 36 | 10 | 14 % |
| 4 | 100 | 45 | 10 | 8 % |

On constate qu'en faisant varier l'épaisseur de la couche fonctionnelle 3 dans la fourchette des valeurs précédemment indiquée, on peut obtenir une gamme large de transmissions lumineuses $T_L$. On précise cependant que ces valeurs d'épaisseurs pour obtenir une valeur de $T_L$ donnée sont dans ces exemples largement tributaires de conditions de dépôt, et notamment du taux de nitruration de l'alliage déposé.

Afin de mettre en évidence les bonnes performances face aux corrosions mécaniques et chimiques des substrats recouverts selon l'invention, on a comparé ces 4 exemples, et plus particulièrement l'exemple 2, avec un exemple 5 comparatif constitué d'un empilement similaire de trois couches oxyde métallique-alliage métallique nitruré-oxyde métallique sur un même substrat, dont les caractéristiques sont les suivantes :

sous-couche (2) : mélange d'oxyde de zinc et d'étain, de 84 nm
couche (3) : acier inoxydable 316 norme A.I.S.I., de 22 nm
sur-couche (4) : oxyde de titane, de 10 nm.

Les caractéristiques photométriques des exemples 2 et 5 sont proches, sachant que la dernière colonne du tableau suivant indique la couleur en réflexion du côté du substrat:

| EX. | $T_L$ | $R_1L$ | $R_2L$ | $T_E$ | dom ($R_1L$) | pe ($R_1L$) | coul. $R_1L$ |
|-----|-------|--------|--------|-------|--------------|-------------|--------------|
| 2 | 19 % | 18 % | 34 % | 20 % | 482 | 24 % | bleu |
| 5 | 20 % | 17 % | 43 % | 17 % | 480 | 22 % | bleu |

Dans les deux cas, on obtient en $R_1L$ une couleur bleu pastel. Par contre, la valeur de $R_2L$ de l'exemple 2 est inférieure à celle de l'exemple 5 : Ainsi, le substrat selon l'exemple 2, installé en vitrage monolithique dans un local, a une réflexion modérée du côté des couches minces (c'est-à-dire à l'intérieur dudit local si elles se trouvent en face 2, ce qui permet de limiter l'effet "miroir" en cas de faible éclairement extérieur et forte luminosité intérieure).

Par contre, les tests de corrosion des deux substrats monolithiques recouverts donnent des résultats très différents : (ces tests chiffrent la période jusqu'à l'apparition d'une altération de l'empilement qui correspond à une modification de $T_L$ de 10 %).

| EX. | abrasion | brouillard salin | brouillard cupro-acétique | dioxyde de soufre |
|-----|----------|------------------|---------------------------|-------------------|
| 2 | 1,8 | > 62 | > 50 | > 37 |
| 5 | 3,7 | 21 | 1 | < 1 |

La faiblesse des résultats aux tests chimiques de l'exemple 5 semble exclure son utilisation en tant que vitrage monolithique dans des conditions extrêmes d'humidité et/ou de pollution.

Par contre, l'empilement de l'exemple 2 selon l'invention présente une excellente résistance chimique, qui met en évidence l'effet conjugué surprenant d'une sous-couche en $Ta_2O_5$, d'une couche fonctionnelle nitrurée et d'une sur-couche en $TiO_2$, ce qui permettrait d'utiliser un substrat avec ce type d'empilement en vitrage monolithique en face 2, quelles que soient les conditions d'utilisation et/ou les conditions climatiques auxquelles ledit vitrage est normalement soumis.

EXEMPLES 6 ET 7 SELON L'INVENTION

Cette deuxième série d'exemples concerne un substrat dont les trois couches minces sont exactement de même nature que dans les exemples 1 à 4 précédents, mais il présente en réflexion $R_1L$ une coloration bronze pour une valeur de $T_L$ d'environ 20 %.

Les épaisseurs des couches minces 2 et 4 selon l'invention sont les suivantes :

| EX. | (2) $Ta_2O_5$ | (4) $TiO_2$ | $T_L$ | $T_E$ | couleur ($R_1L$) |
|-----|---------------|-------------|-------|-------|------------------|
| 6 | 37,5 | 10 | 19 % | 20 % | bronze soutenu |
| 7 | 12,5 | 10 | 19 % | 20 % | bronze clair |

EXEMPLES COMPARATIFS 8 A 10

La série d'exemples suivants concerne un substrat à couches minces présentant une réflexion dans le visible du côté du verre colorée en bronze, avec une sur-couche 4 à base d'oxyde de titane et une sous-couche 2 à base d'oxyde de titane $TiO_2$ également.

La cible métallique utilisée pour obtenir la couche 3 fonctionnelle est en INCONEL 671 pour l'exemple 8, c'est-à-dire essentiellement à base de Ni-Cr selon le standard ASTM, obtenue tout comme dans les exemples 1 à 7 précédents.

Dans l'exemple 9, la couche (3) contient également du fer et la cible est en acier nitruré SST 316 norme A.I.S.I.

Le substrat 1 est en verre silico-sodo-calcique clair flotté de 6 mm d'épaisseur.

On adapte l'épaisseur de la couche 3 dans chaque exemple afin d'obtenir la valeur de transmission lumineuse $T_L$ voulue. Ici, elle est comprise entre 10 et 100 nm.

Les épaisseurs en nanomètres de la sous-couche 2 en $TiO_2$ de la couche fonctionnelle 3, de la sur-couche 4 en $TiO_2$, ainsi que la transmission lumineuse $T_L$ de l'ensemble substrat/multicouches sont indiquées ci-dessous :

| EXEMPLES | (2) $TiO_2$ | (3) couche fonctionnelle | (4) $TiO_2$ | $T_L$ |
|---|---|---|---|---|
| 8 | 15 | 28 | 10 | 21 % |
| 9 | 15 | 28 | 10 | 21 % |

On a comparé ces 3 exemples, et plus particulièrement les exemples 8 et 9, avec un exemple 10 constitué d'un empilement similaire de trois couches oxyde métallique-alliage métallique nitruré-oxyde métallique sur un même substrat, dont les caractéristiques sont les suivantes :

sous-couche (2) :     mélange d'oxydes de zinc et d'étain, de 10 nm
couche (3) :     acier inoxydable 316 norme A.I.S.I., de 20 nm
sur-couche (4) :     oxyde de titane, de 10 nm.

Les caractéristiques photométriques des exemples 8, 9 d'une part et 10 d'autre part sont proches, sachant que la dernière colonne du tableau suivant indique la couleur en réflexion du côté du substrat:

| EX. | $T_L$ | $R_1L$ | $R_2L$ | $T_E$ | dom ($R_1L$) | pe ($R_1L$) | coul ($R_1L$) |
|---|---|---|---|---|---|---|---|
| 8 | 21 % | 26 % | 32 % | 18 % | 493 | 2,1 % | bronze clair |
| 9 | 21 % | 25 % | 30 % | 17 % | 504 | 0,8 % | bronze clair |
| 10 | 20 % | 25 % | 35 % | 17 % | 490 | 2,1 % | bronze clair |

Dans les trois cas, on obtient en $R_1L$ une couleur dans une tonalité bronze très pastel. Les tests de corrosion des trois substrats monolithiques recouverts donnent cependant des résultats très différents : (ces tests chiffrent la période jusqu'à l'apparition d'une altération de l'empilement correspondant à l'apparition d'un premier défaut visible).

| EX. | abrasion | brouillard salin | brouillard cupro-acétique | dioxyde de soufre |
|---|---|---|---|---|
| 8 | 2,5 | > 78 | > 90 | > 20 |
| 9 | 1,5 | > 78 | > 90 | 5 |
| 10 | 2,1 | 14 | 1 | 1 |

La faiblesse des résultats aux tests chimiques de l'exemple 10 semble exclure son utilisation en vitrage monolithique dans des conditions extrêmes d'humidité et/ou de pollution.

Par contre, les empilements des exemples 8 et 9, et plus particulièrement de l'exemple 8 présentent une excellente résistance chimique, qui met en évidence l'effet conjugué surprenant d'une sous-couche en $TiO_2$ et d'une couche métallique à base de nickel et de chrome nitruré et d'une sur-couche en $TiO_2$, ce qui permet d'utiliser là encore un substrat avec ce type d'empilement en vitrage monolithique, quelles que soient les conditions d'utilisation et/ou climatiques auxquelles ledit vitrage est normalement soumis.

On a dans ces exemples choisi pour la sous-couche 2 en $TiO_2$ une épaisseur faible, ce qui permet d'obtenir un vitrage dont la couleur en réflexion $R_1L$ bronze est assez appréciée esthétiquement dans le bâtiment. Il est clair, cependant, qu'en jouant sur cette épaisseur, et notamment en l'augmentant sensiblement, on obtient un effet interférentiel permettant de modifier cette tonalité. Ceci permet alors de pouvoir offrir des vitrages ayant différentes valeurs de $T_L$, et, pour chacune de ces valeurs, différentes couleurs en réflexion $R_1L$, sélection d'épaisseur(s) qui peut s'opérer aussi bien pour les exemples selon l'invention.

<u>EXEMPLES COMPARATIFS 11 A 14</u>

La série d'exemples 11 à 14 concerne un substrat à couches minces présentant une réflexion dans le visible du côté du verre colorée en bleu, avec une sous-couche 2 en $SnO_2$ et une sur-couche 4 en $TiO_2$.

La cible métallique utilisée pour obtenir la couche 3 fonctionnelle est en INCONEL 671 selon le standard ASTM comme précédemment.

Le substrat 1 est en verre silico-sodo-calcique clair flotté de 6 mm d'épaisseur.

On adapte l'épaisseur de la couche 3 dans chacun des exemples afin d'obtenir la valeur de $T_L$ voulue. Ici, comme dans les exemples suivants 15 et 16 elle est comprise entre 10 et 100 nm.

Les épaisseurs en nanomètres de la sous-couche 2 en $SnO_2$, de la couche fonctionnelle 3, de la sur-couche 4 en $TiO_2$, ainsi que la transmission lumineuse $T_L$ de l'ensemble substrat/multicouches sont indiquées ci-dessous :

| EXEMPLES | (2) $SnO_2$ | (3) $NiCrN_x$ | (4) $TiO_2$ | $T_L$ |
|----------|-------------|---------------|-------------|-------|
| 11 | 85± 5 | 15 | 10 | 35 % |
| 12 | 85± 5 | 28 | 10 | 19 % |
| 13 | 85± 5 | 36 | 10 | 14 % |
| 14 | 85± 5 | 45 | 10 | 8 % |

On a comparé ces 4 exemples, et plus particulièrement l'exemple 13, avec l'exemple 5.

Les caractéristiques photométriques des exemples 13 et 5 sont proches, sachant que la dernière colonne du tableau suivant indique la couleur en réflexion du côté du substrat:

| EX. | $T_L$ | $R_1L$ | $R_2L$ | $T_E$ | dom ($R_1L$) | pe ($R_1L$) | coul. $R_1L$ |
|-----|-------|--------|--------|-------|--------------|-------------|--------------|
| 12 | 19,5 % | 17,7 % | 38,6 % | 18 % | 481 | 25,9 % | bleu |
| 5 | 20 % | 17 % | 43 % | 17 % | 480 | 22 % | bleu |

Dans les deux cas, on obtient en $R_1L$ une couleur bleu pastel. Par contre, la valeur de $R_2L$ de l'exemple 13 est inférieure à celle de l'exemple 5.

Par contre, les tests de corrosion des deux substrats monolithiques recouverts donnent des résultats très différents : (ces tests chiffrent la période jusqu'à l'apparition d'une altération dans l'empilement se traduisant par un premier défaut visible).

| EX. | abrasion | brouillard salin | brouillard cupro-acétique | dioxyde de soufre |
|-----|----------|------------------|---------------------------|-------------------|
| 12 | 1,0 | > 60 | > 60 | > 5 |
| 5 | 3,7 | 7 | 1 | < 1 |

La faiblesse des résultats aux tests chimiques de l'exemple 5 est claire.

Par contre, l'empilement de l'exemple 12 présente une excellente résistance chimique, qui met en évidence l'effet conjugué surprenant d'une sous-couche en $SnO_2$ résistante d'une couche fonctionnelle nitrurée et d'une sur-couche en $TiO_2$, ce qui permettrait d'utiliser un substrat avec ce type d'empilement en vitrage monolithique en face 2, quelles que soient les conditions d'utilisation et/ou climatiques auxquelles ledit vitrage est normalement soumis.

## EXEMPLES COMPARATIFS 15 ET 16

Cette série d'exemples concerne un substrat dont les trois couches minces sont exactement de même nature que dans les exemples 11 à 14 précédents, mais ils présentent en réflexion $R_1L$ une coloration bronze pour une valeur de $T_L$ d'environ 20 %.

Les épaisseurs des couches minces 2 et 4 sont les suivantes :

| EX. | (2) $SnO_2$ | (4) $TiO_2$ | $T_L$ | $T_E$ | couleur ($R_1L$) |
|-----|-------------|-------------|-------|-------|------------------|
| 15 | 30 | 10 | 19 % | 20 % | bronze soutenu |
| 16 | 10 | 10 | 19 % | 20 % | bronze clair |

En conclusion, tous les exemples de la présente demande 1-4 et 6-7 qui sont conformes à l'invention concernent des vitrages dont la résistance à la corrosion est excellente. En outre, il est possible d'obtenir des vitrages présentant une large gamme de propriétés spectrophotométriques.

Ainsi, en faisant varier l'épaisseur de la couche fonctionnelle, on peut sélectionner la transmission lumineuse souhaitée. De plus en ne modifiant que l'épaisseur de la sous-couche, on diversifie la gamme de couleurs pastel en réflexion $R_1L$, en maintenant une valeur de $T_L$ à peu près constante.

Il va de soi, alors, qu'en modifiant à la fois l'épaisseur de la sous-couche et celle de la couche fonctionnelle, on obtient des substrats à couches minces de différentes couleurs en réflexion $R_1L$ et, pour chacune de ces couleurs, différentes transmissions lumineuses $T_L$ et transmissions énergétiques $T_E$.

On peut également sélectionner une épaisseur de sur-couche plus ou moins importante afin soit de la cantonner dans un rôle de protection, soit également lui conférer un rôle interférentiel.

Il est à noter également qu'en sélectionnant de manière adéquate les épaisseurs des couches, il est possible de moduler également la réflexion $R_2L$.


**Revendications**

1. Substrat (1) en verre muni d'un empilement de couches minces comprenant une couche fonctionnelle (3) à base d'alliage métallique d'une part déposée sur une sous-couche (2) elle-même déposée sur ledit substrat (1) et d'autre part recouverte d'une sur-couche (4), **caractérisé en ce que**

   - la couche fonctionnelle (3) consiste substantiellement en un alliage nickel-chrome nitruré et a une épaisseur géométrique de 15 à 45 nm afin que le substrat (1) muni de ces trois couches (2, 3, 4) puisse présenter une transmission lumineuse $T_L$ de 35 à 8 %,
   - la sous-couche (2) est en oxyde de tantale,
   - la sur-couche (4) est en un composé métallique choisi parmi l'oxyde de titane, le nitrure de titane et l'oxyde de tantale.

2. Substrat (1) selon la revendication 1, **caractérisé en ce que** l'épaisseur de la sous-couche (2) en oxyde de tantale est comprise entre 10 et 220 nm.

3. Substrat selon l'une des revendications précédentes, **caractérisé en ce que** l'épaisseur de la sur-couche (4) en composé métallique placée sur la couche (3) fonctionnelle est comprise entre 5 et 100 nm.

4. Substrat (1) l'une des revendications précédentes, **caractérisé en ce que** la sur-couche (4) en oxyde de titane.

5. Substrat (1) selon la revendication 4, **caractérisé en ce que** sont déposés sur le substrat (1) en verre clair respectivement une sous-couche (2) d'oxyde de tantale de 100 nm d'épaisseur afin d'obtenir une couleur bleue en réflexion, puis une couche fonctionnelle (3) de NiCr nitruré, puis une sur-couche (4) d'oxyde de titane de 10 nm d'épaisseur.

6. Substrat (1) selon la revendication 4 **caractérisé en ce que** sont déposés sur le substrat (1) en verre clair respectivement une sous-couche (2) d'oxyde de tantale de 37,5 à 12,5 nm afin d'obtenir une couleur bronze en réflexion, puis une couche fonctionnelle (3) de NiCr nitruré d'épaisseur choisie afin d'obtenir une transmission lumineuse $T_L$ de 19 % puis une sur-couche (4) d'oxyde de titane de 10 nm.

7. Substrat selon une des revendications précédentes, **caractérisé en ce que** les couches (2, 3, 4) sont obtenues par pulvérisation cathodique réactive sous vide assistée par champ magnétique, les oxydes métalliques en présence d'oxygène, et les alliages nitrurés ou les nitrures en présence d'azote.

8. Application du substrat selon une des revendications précédentes à un vitrage de protection solaire destiné au bâtiment ou à l'automobile.


**Patentansprüche**

1. Glassubstrat (1), versehen mit einem Aufbau aus dünnen Schichten, der eine funktionelle Schicht (3) auf der Grundlage einer Metallegierung umfaßt, welche einerseits auf einer Unterschicht (2) aufgebracht, die ihrerseits auf dem Substrat (1) abgeschieden ist, und andererseits mit einer Deckschicht (4) überzogen ist, **dadurch gekennzeichnet, daß**

   - die funktionelle Schicht (3) im wesentlichen aus einer nitridierten Chromnickellegierung besteht und eine geometrische Dicke von 15 bis 45 nm besitzt, damit das Substrat (1), das mit diesen drei Schichten (2, 3, 4) versehen ist, einen Lichttransmissionsgrad $T_L$ von 35 bis 8 % aufweisen kann,

   - die Unterschicht (2) aus Tantaloxid besteht und

- die Deckschicht (4) aus einer Metallverbindung besteht,die aus Titanoxid, Titannitrid und Tantaloxid ausgewählt ist.

2. Substrat (1) nach Anspruch 1, **dadurch gekennzeichnet, daß** die Dicke der Tantaloxid-Unterschicht (2) 10 bis 220 nm beträgt.

3. Substrat nach Anspruch 1 oder 2, **dadurch gekennzeichnet, daß** die Dicke der Deckschicht (4) aus einer Metallverbindung, mit welcher die funktionelle Schicht (3) überzogen ist, 5 bis 100 nm beträgt.

4. Substrat (1) nach einem der vorhergehenden Ansprüche, **dadurch gekennzeichnet, daß** die Deckschicht (4) aus Titanoxid besteht.

5. Substrat (1) nach Anspruch 4, **dadurch gekennzeichnet, daß** auf dem Substrat (1) aus Klarglas jeweils eine 100 nm dicke Tantaloxid-Unterschicht (2), um unter einfallendem Licht eine blaue Färbung zu erhalten, anschließend eine funktionelle Schicht (3) aus nitridiertem CrNi und danach eine 10 nm dicke Titanoxid-Deckschicht (4) aufgebracht ist.

6. Substrat (1) nach Anspruch 4, **dadurch gekennzeichnet, daß** auf dem Substrat (1) aus Klarglas jeweils eine 37,5 bis 12,5 nm dicke Tantaloxid-Unterschicht (2), um unter einfallendem Licht eine Bronzefärbung zu erhalten, anschließend eine funktionelle Schicht (3) aus nitridiertem CrNi, deren Dicke derart gewählt ist, daß ein Lichttransmissionsgrad $T_L$ von 19 % erhalten wird, und danach eine 10 nm dicke Titanoxid-Deckschicht (4) aufgebracht ist.

7. Substrat nach einem der vorhergehenden Ansprüche, **dadurch gekennzeichnet, daß** die Schichten (2, 3, 4) durch magnetfeldgestützte reaktive Kathodenzerstäubung unter Vakumm - dabei die Metalloxide in Gegenwart von Sauerstoff und die nitridierten Legierungen oder die Nitride in Gegenwart von Stickstoff - hergestellt sind.

8. Verwendung des Substrats nach einem der vorhergehenden Ansprüche für eine für Gebäude oder Kraftfahrzeuge vorgesehene Sonnenschutzverglasung.

**Claims**

1. Substrate (1) of glass, provided with a stack of thin films comprising a functional film (3) based upon metal alloy, on the one hand, deposited on an underlying film (2) itself deposited on said substrate (1) and, on the other hand, covered with an overlying film (4), characterized in that

    - the functional film (3) consists substantially of a nitrided nickel-chrome alloy having a geometric thicknesa of 15 to 45 nm so that the substrate (1) provided with these three films (2, 3, 4) may have a light transmission $T_L$ of 35 to 8%,
    - the underlying film (2) is of tantalum oxide,
    - the overlying film (4) is of a metallic compound chosen from among titanium oxide, titanium nitride and tantalum oxide.

2. Substrate (1) according to Claim 1, characterized in that the thickness of the underlying film (2) of tantalum oxide is from 10 to 220 nm.

3. Substrate according to one of the preceding Claims, characterized in that the thickness of the overlying film (4) of metallic compound placed on the functional film (3) is from 5 to 100 nm.

4. Substrate (1) according to one of the preceding Claims, characterized in that the overlying film (4) is of titanium oxide.

5. Substrate (1) according to Claim 4, characterized in that onto the substrate (1) of clear glass there are deposited, respectively, an underlying film (2) of tantalum oxide of 100 nm thickness for the purpose of obtaining a blue colour in reflection, then a functional film (3) of nitrided NiCr, then an overlying film (4) of titanium oxide of 10 nm thickness.

6. Substrate (1) according to Claim 4, characterized in that onto the substrate (1) of clear glass there are deposited, respectively, an underlying film (2) of tantalum oxide of 37.5 to 12.5 nm thickness for the purpose of obtaining a bronze colour in reflection, then a functional film (3) of nitrided NiCr of thickness chosen so as to obtain a light transmission $T_L$ of 19%, then an overlying film (4) of titanium oxide of 10 nm thickness.

7. Substrate according to one of the preceding Claims, characterized in that the films (2, 3, 4) are produced by reactive cathodic sputtering under vacuum assisted by magnetic field, the metallic oxides in the presence of oxygen, and the nitrided alloys or the nitrides in the presence of nitrogen.

8. Application of the substrate according to one of the preceding Claims to a glazing pane for protection against solar radiation intended for use in building or ship-building or in the automobile industry.

## FIG.1